# EUROPÄISCHE PATENTSCHRIFT

(11) **EP 0 613 774 B1**
(45) Veröffentlichungstag und Bekanntmachung des Hinweises auf die Patenterteilung: **02.05.1997**
(21) Anmeldenummer: 94102562.9
(22) Anmeldetag: 21.02.1994
(51) Int. Cl.: B32B 27/32, B32B 27/34, B65D 65/40

(54) **Mehrschichtige, leicht tiefziehfähige, Polyamid enthaltende Folie mit verbesserter Durchstichfestigkeit**
Easy deep drawable multilayered film comprising polyamide with improved piercing resistance
Feuille multicouche, adaptée à l'emboutissage, contenant du polyamide avec une résistance améliorée au perçage

(30) Priorität: 04.03.1993 DE 4306716
(43) Veröffentlichungstag der Anmeldung: 07.09.1994
(73) Patentinhaber: WOLFF WALSRODE AKTIENGESELLSCHAFT, D-29699 Walsrode (DE)
(72) Erfinder: Kaschel, Gregor, Dr., D-29664 Walsrode (DE); Hennig, Michael, Dipl.-Ing., D-29664 Walsrode (DE); Reiners, Ulrich, Dr., D-29643 Neuenkirchen (DE)
(74) Vertreter: Braun, Rolf, Dr.

(56) Entgegenhaltungen:
- EP-A- 0 102 738
- EP-A- 0 465 931
- DE-A- 4 128 081
- NL-A- 8 004 795

## Beschreibung

Die vorliegende Erfindung betrifft eine mehrschichtige, nicht verstreckte leicht thermoformbare, Polyamid enthaltende Folie, die sich infolge ihrer verbesserten Durchstichfestigkeit und gleichzeitig guten Tiefzieheigenschaft (Thermoformbarkeit) insbesondere zur Verpackung von scharfkantigen Füllgütern eignet. Die Verpackung muß für den Weg des Produktes zum Verbraucher einen sicheren Schutz des Füllgutes gewährleisten. Scharfkantige Lebensmittel sind besonders gefährdet, da die Haltbarkeit infolge mechanischer Verletzungen der umhüllenden Folie nicht gewährleistet ist. Aus ökologischen und ökonomischen Gründen besteht hier besonderer Handlungsbedarf.

Es sind nach dem Stand der Technik bereits vielfältige Mehrschichtverbunde mit zwei separaten PA-Schichten bekannt. Diese zeichnen sich durch gute Tiefzieheigenschaften und erhöhte Sicherheit gegen Knickbruch aus (Kunststoffe 79 (1989) 9, S. 818-822). Die Durchstichfestigkeit läßt sich durch den Einsatz von unverhältnismäßig hohen Polyamidschichtdicken und damit auch dickeren Folien beliebig steigern. Dadurch wird allerdings die Thermoformbarkeit stark reduziert, da der Verformungswiderstand größer wird. Ökologische und ökonomische Gründe sprechen ebenfalls gegen eine Anhebung der Polyamidschichtdicken; sie tragen zum einen nicht zur Reduzierung von Verpackungsmaterial bei und führen zum anderen zu steigenden Folienpreisen, da relativ teures Polyamid eingesetzt wird.

In EP-465 931 wird eine mehrschichtige, mindestens in einer Richtung gereckte Folie mit 1 bis 4 Polyamidschichten als Verpackungsmaterial angegeben. Mindestens eine Polyamidschicht enthalt 50 bis 95 Gew.-% kristallines PA und 5 bis 50 Gew.-% amorphes PA. Die gereckte Folie zeichnet sich durch eine gleichmäßige Dicke aus. Allerdings ist diese Folie nicht ausreichend tiefziehbar, da sie bereits in mindestens einer Richtung gereckt wurde. Daher kann diese Folie für die Mehrzahl aller Tiefziehanwendungen nicht eingesetzt werden.

JA 4 164 641 und JA 4 216 933 behandeln Verbundfolien, die eine oder mehrere Schicht(en) PA MXD6 beinhalten, eine Schicht verseiften Ethylen-Vinylacetat-Copolymers, eine Schicht modifizierten Polyolefins und eine durch Wärme siegelbare Schicht. Die Folien mit Schichten aus PA MXD6 auf Basis von m-Xylylendiamin und Adipinsäure oder einem Blend aus PA MXD6 mit einem anderen Polyamid haben den Nachteil, daß sie infolge ihrer hohen Steifigkeit nur bei hohen Temperaturen verformt werden können. Weiterhin können sie infolge kleiner Verformungswege nur geringe Durchsticharbeiten aufnehmen.

In EP 0 102 738 A1 wird eine mehrschichtige Folie beschrieben, die folgende Schichten enthält:
- Polyamid (z.B. PA6),
- Ethylen/Vinylalkohol-Copolymer,
- Polyamid (z.B. PA6),
- einem mit Anhydrid modifiziertem mitteldichtem Polyethylen,
- einer Schicht enthaltend Linear-Low-Density-Polyethylen und
- Linear-Low-Density-Polyethylen.

Die Foliendicke liegt zwischen 130 und 380 µm, wobei die dickste Schicht normalerweise die Siegelschicht ist und die dünnsten Schichten der Haftvermittler und das Ethylen/Vinylalkohol-Copolymer sind. Aus der beschriebenen Folie läßt sich ein transparenter Beutel herstellen, der für die Hitzesterilisation geeignet ist.

In allen vorliegenden Quellen werden Folienaufbauten mit dem gemeinsamen Nachteil genannt, daß die zu kombinierenden Anforderungen der
a) leichten Thermoformbarkeit und
b) hohen Durchstichfestigkeit
nicht erfüllt werden. Verbundfolien mit großen Polyamiddicken lassen sich nur durch langanhaltende Einwirkung hoher Formtemperaturen tiefziehen. Dadurch wird die Geschwindigkeit der Verpackungseinrichtung verringert, es können nur geringere Taktzahlen gefahren werden. Die Optik der Folie wird ebenfalls negativ beeinträchtigt. Eine Reduzierung der Polyamiddicke würde wiederum zu niedrigeren Durchstichfestigkeiten führen.

Es stellt sich daher die Aufgabe, eine Mehrschichtfolie mit verbesserter Durchstichfestigkeit und Thermoformbarkeit bereitzustellen die sich zur Verpackung scharfkantiger Füllgüter eignet.

Die zu erfüllenden Forderungen lauten:
**1. Thermoformbarkeit**
   Die Folie wird in der Regel vor dem Befüllvorgang erwärmt und in speziell ausgeformten Mulden tiefgezogen. Wünschenswert sind eine niedrige Formtemperatur und eine hohe Folienrestdicke in den kritischen Stellen, insbesondere in den Muldenecken. Durch niedrige Formtemperaturen kann die Geschwindigkeit der Verpackungsmaschinen erhöht und die thermische Beanspruchung der Folie deutlich reduziert werden. Die Folie bleibt transparent, ein Abdruck der Heizplatten auf einer Folienseite wird nahezu vollständig vermieden.
**2. Durchstichfestigkeit**
   Alle bisherigen Erfahrungen zeigen, daß durch eine Vergrößerung der Schichtdicke(n) des Polyamids die Durchstichfestigkeit verbessert wird. Ziel muß es daher sein, auch bei gleichbleibender Polyamiddicke die Durchstichfestigkeit zu erhöhen, damit die Thermoformbarkeit nicht beeinträchtigt wird. Die beim Durchstich der Folie aufgenommene Arbeit bezogen auf die Gesamtdicke der Polyamidschicht(en) ist als Beurteilungskriterium besonders geeignet.

Überraschenderweise konnten die oben genannten Anforderungen durch eine mehrschichtige, nicht verstreckte leicht thermoformbare, Polyamid enthaltende Folie erreicht werden. Die erfindungsgemäße Folie ist insbesondere zur Verpackung von scharfkantigen Füllgütern geeignet. Der Folienaufbau mit der Sequenzanordnung ABCD ist dadurch gekennzeichnet, daß
- die Sequenz A aus mindestens einem Copolyamid, basierend auf Caprolactam, und/oder einer Mischung aus aliphatischem Polyamid mit Copolyamid, basierend auf Caprolactam, und/oder amorphem Polyamid besteht,
- die Sequenz B mindestens eine Schicht olefinischer (Co-)Polymere beinhaltet,
- die Sequenz C mindestens eine Schicht Copolyamid, basierend auf Caprolactam, und/oder einer Mischung eines aliphatischen Polamids mit einem Copolyamid, basierend auf Caprolactam, und/oder aromatischen Polyamid beinhaltet und das Dickenverhältnis C/A von 1,5 bis 4 beträgt,
- die Sequenz D mindestens eine Schicht olefinischer (Co-)Polymere beinhaltet, die als Außenschicht aus einem Siegelwerkstoff besteht, und daß die Dicken im Verhältnis D/B von 3 bis 10, vorzugsweise 4 bis 7, liegen.

Die Sequenz A beinhaltet ein auf PA 6 basierendes Copolyamid und/oder eine Mischung aus einem aliphatischen Polyamid wie z.B. PA6, PA66, PA6.10, PA6.11, PA6.12, PA11 oder PA12 mit einem auf PA6 basierenden Copolyamid und/oder einem amorphen Polyamid.

Die Sequenz B beinhaltet mindestens eine Lage olefinischer (Co-)Polymere. Die Schicht B kann als Haftvermittler zwischen den Schichten A und C wirken, die auch nach einer Thermoformung ihre haftvermittelnde Funktion erfüllen. Für diese Aufgabe eignen sich besonders PE- und PP-Copolymere mit funktionellen Gruppen.

Die Sequenz C besteht aus einem auf PA6 basierenden Copolyamid und/oder einer Mischung aus einem aliphatischen Polyamid wie z.B. PA6, PA66, PA6.10, PA6.11, PA6.12, PA11 oder PA12 mit einem auf PA6 basierenden Copolyamid und/oder einem amorphen Polyamid. Das Dickenverhältnis C/A sollte im Bereich 1,5 bis 4 liegen. Die in der Sequenz C enthaltenen Schichten können durch Coextrusion, Klebstoffkaschierung oder Extrusionsbeschichtung oder eine Kombination der genannten Fertigungstechniken hergestellt werden.

Durch die Anordnung der Sequenz C zwischen zwei Polyolefinen wird zudem eine beidseitige Wasserdampfbarriere erzielt, so daß die natürlichen Sperreigenschaften des Polyamides insbesondere gegenüber Sauerstoff nicht durch Feuchtigkeitseinflüsse maßgeblich reduziert wird. Dies ist von besonderem Vorteil, da die Sequenz C gegenüber der Sequenz A eine höhere Dicke aufweist und damit die Sperreigenschaft der Folie deutlich verbessert und von Klimaschwankungen unabhängiger ist.

Die Sequenz D beinhaltet mindestens eine Schicht olefinischer (Co-)Polymere. Als Außenschicht wird ein Siegelrohstoff eingesetzt. Dies kann ein Polyethylen, ein Ethylen/Vinylacetat-Copolymeres, ein Ethylen/Acrylsäure-Copolymer, Ethylen/Methylenacrylsäure-Copolymer oder Ionomer oder aber eine Mischung aus den genannten Polymeren sein. Das Verhältnis der Dicken D/B liegt im Bereich 3 bis 10, vorzugsweise im Bereich 4 bis 7.

Überraschenderweise ist es durch den erfindungsgemäßen Folienaufbau gelungen, die besonderen Anforderungen an die Thermoformbarkeit und Durchstichfestigkeit zu erfüllen. Die Folie läßt sich bereits bei niedrigen Temperaturen von 70 bis 90 C gut tiefziehen. Die Restdicke der Folie in den besonders kritisch zu beurteilenden Muldenecken ist deutlich verbessert. Die Folie bleibt auch nach der Verformung im gesamten Bereich der Mulde transparent.

Die verwendeten Polymere sind im Anschluß an die aufgeführten Beispiele und Vergleichsbeispiele erläutert. Polyamide sind mit dem Buchstaben "A" gekennzeichnet, Polyethylen mit dem Buchstaben "B".

### Beispiel 1

eine mehrschichtige Folie mit dem Aufbau

| (A1+A2) | B3 | (A1+A2)/(A1+A3) | B1/B2 |
|---|---|---|---|
| 8 % | 13 % | 23 % | 56 % |

Die Schichtdickenanteile sind auf die Foliendicke von 320 µm bezogen. Die Folie ist durch Coextrusion und Extrusionsbeschichtung hergestellt worden. Das Mischungsverhältnis der Polymere A1 zu A2 beträgt 85:15 Gew.-% und das Mischungsverhältnis A1 zu A3 beträgt 90:10 Gew.-%.

### Beispiel 2

eine mehrschichtige Folie mit dem Aufbau

| (A1+A2) | B4 | (A1+A2) | B4/B1/B2 |
|---|---|---|---|
| 9 % | 9 % | 22 % | 60 % |

Die Schichtdickenanteile sind auf die Foliendicke von 320 µm bezogen. Die Folie ist durch Coextrusion und Extrusionsbeschichtung hergestellt worden. Das Mischungsverhältnis der Polymere A1 zu A2 beträgt 85:15 Gew.-%. Die beiden Polyamidschichten (A1+A2) sind durch eine im Vergleich zum Beispiel 1 dünnere Haltvermittlerschicht miteinander verbunden. Wie die Tabelle 1 belegt, weist die Folie aus dem Beispiel 2 sehr hohe Durchstichwerte auf, jedoch gegenüber Beispiel 1 geringfügig niedriger.

### Vergleichsbeispiel 3

Eine mehrschichtige Folie mit dem Aufbau:

| A1 | B1/B2/B1 | A1 | B1/B2 |
|---|---|---|---|
| 12 % | 46 % | 15 % | 27 % |

Die Schichtdickenanteile sind auf die Foliendicke von 385 µm bezogen. Die Polyamidschichten basieren auf PA6, sind als Solofilme gefertigt worden und anschließend mit den als Coextrusion gefertigten, polyethylenischen Schichten verklebt. Die Siegelschicht ist ein Ethylen/Vinylacetat-Copolymeres mit einem Acetatgehalt von 3 Gew.-%.

Im Vergleich zu allen anderen Mustern weist das Vergleichsbeispiel 3 die höchste Foliendicke auf. Die beiden Polyamidschichten sind verhältnismäßig weit voneinander getrennt.

### Vergleichsbeispiel 4

Eine mehrschichtige Folie mit dem Aufbau:

| B6/B4 | A1 | B4/B1 |
|---|---|---|
| 25 % | 36 % | 39 % |

Die Schichtdickenanteile sind auf die Foliendicke von 350 µm bezogen. Der Folienaufbau ist symetrisch. Die Folie ist als Blasfolie hergestellt worden, die Verbundhaftung zwischen Polyamid und Polyethylen wird über coextrudierte Haftvermittler (B4) erzielt. Im Vergleich zu allen anderen Mustern weist Vergleichsbeispiel 4 die höchste Polyamidschichtdicke auf.

### Vergleichsbeispiel 5

Eine mehrschichtige Folie mit dem Aufbau:

| A1 | B4 | A1 | B4/B1/B4/B5 |
|---|---|---|---|
| 13 % | 3 % | 13 % | 71 % |

Die Schichtdickenanteile sind auf die Foliendicke von 320 µm bezogen. Der Folienaufbau ist asymetrisch. Die Folie ist durch Coextrusion und Extrusionskaschierung hergestellt worden. Die beiden PA6-Schichten sind über eine dünne Schicht eines polyolefinischen Haftvermittlers verbunden. Die Siegelschicht besteht aus einem Ionomer.

### Vergleichsbeispiel 6

Eine mehrschichtige Folie mit dem Aufbau:

| (A1+A2) | B4 | (A1+A2) | B4/B1/B2 |
|---|---|---|---|
| 22 % | 4 % | 22 % | 52 % |

Die Schichtdickenanteile sind auf die Foliendicke von 250 µm bezogen. Der Folienaufbau ist asymetrisch. Die Folie ist durch Coextrusion und Extrusionsbeschichtung hergestellt worden. Wie im Vergleichsbeispiel 5 sind die Polyamidschichten durch einen coextrudierten Haftvermittler verbunden.

Bei der Bezeichnung der Polymeren sind folgende Abkürzungen eingeführt worden:
- A1: teilkristallines, aliphatisches Polyamid bestehend aus Caprolactam (PA6) mit der Dichte 1,14 kg/l und der Kristallitschmelztemperatur von ca. 219°C.
- A2: cyclisches teilaromatisches Polyamid bestehend aus ca. 50 Gew.-% Hexamethylendiamin und ca. 50 Gew.-% Isophthal- und Terephthalsäure im Mischungsverhältnis zwei zu eins. Die Dichte beträgt 1,19 kg/l und die Glasübergangstemperatur liegt bei ca. 125°C.
- A3: teilkristallines, aliphatisches Polyamid basierend auf Caprolactam und Laurinlactam (PA6/12) mit ca. 10 Gew.-% Laurinlactam. Die Dichte beträgt 1,1 kg/l und die Kristallitschmelztemperatur liegt bei 200°C.
- B1: Polyethylen (PE-LD) mit der Dichte 0,915 kg/l und der Kristallitschmelztemperatur von 104°C.
- B2: Copolymerisat aus Ethylen und ca. 3-5 Gew.-% Vinylacetat (EVA). Die Dichte beträgt 0,925 kg/l und die Kristallitschmelztemperatur ca. 102°C.
- B3: Copolymerisat aus Ethylen und Methylenacrylat mit der Dichte 0,94 kg/l, der Kristallitschmelztemperatur von 99°C.
- B4: koextrudierbarer Haftvermittler auf Basis von Liniear-Low-Density-Polyethylen (PE-LLD). Der Haftvermittler ist chemisch modifiziert mit Maleinsäureanhydrid. Die Dichte liegt bei 0,92 kg/l und die Kristallitschmelztemperatur bei 125°C.
- B5: Copolymerisat aus Ethylen und Methylenacrylat, dessen Kettenmoleküle über Na-Ionenbindung vernetzt sind (Ionomer). Die Dichte liegt bei 0,94 kg/l und die Kristallitschmelztemperatur bei 94°C.
- B6: Linear-Low-Density-Polyethylen (PE-LLD), die Dichte liegt bei 0,92 kg/l und der Kristallitschmelzpunkt bei 121°C.

Die Durchstichprüfung erfolgt nach einer internen Prüfvorschrift. Sie ist konzipiert zur Beurteilung von Folien, die mit scharfkantigen Gegenständen beansprucht werden. Gemessen wird die Kraft und der Weg, den eine Nadel zum Durchstechen einer membranartig aufgespannten Folie benötigt. Die Durchsticharbeit wird aus dem Integral über kraft und Weg bestimmt.

Als Muster wird eine kreisförmige Probe mit dem Durchmesser von 80 mm ausgeschnitten. Sie wird in eine Probenhalterung eingespannt, die in einer Zugprüfmaschine befestigt ist. Auf der beweglichen Traverse ist an einem Kraftsensor eine Nadel angebracht. Die Nadel hat an ihrer Spitze einen Durchmesser von 1 mm. Sie ist kegelförmig ausgebildet, der Winkel beträgt 90°. Gemessen werden jeweils mindestens fünf Proben.

Die Beurteilung der Thermoformbarkeit erfolgt auf Tiefziehmaschinen, wie sie üblicherweise in der Verpackendenindustrie eingesetzt werden. Eine an ihren Längsseiten beidseitig eingespannte Folienbahn wird mittels einer Heizplatte vorgewärmt. Durch Absaugen der Luft zwischen der in ihrer Oberfläche strukturierten Platte und der Folie wird ein guter Wärmeübergang erzielt. Die Erwärmung der Folie kann auf der Siegelseite oder aber auf der ihr abgewandten Seite erfolgen.

Die mit Plattentemperaturen von 70 bis 100°C erwärmte Folie wird durch Anlegen einer Luftdruckdifferenz in eine Mulde mit dem Rahmenmaß 115 x 185 mm gezogen. Die Tiefe der Mulde wird im Bereich von 50 bis 100 mm variiert.

Beurteilt wird das Tiefziehergebnis der Folie nach folgenden Kriterien:
a) Abdruck der Heizplatte auf der Folie,
b) Ausformung der Mulde,
c) Transparenz der Folie und Mulde und
d) Restdicken in den als besonders kritisch zu beurteilenden Muldenecken, da dort erfahrungsgemäß die niedrigsten Foliendicken gemessen werden.

Bemängelt wird zu a) ein sichtbarer Abdruck der Heizplatte auf der Folie, zu b) eine nicht vollständig ausgeformte Mulde, zu c) eine Eintrübung der Folie oder Mulde und zu d) eine niedrigere Restdicke als 15 % bezogen auf die Ausgangsdicke der Folie in den Muldenecken.

Bewertet wird die Folie entsprechend den genannten Kriterien. Ein Ergebnis der Einstufung "+" bedeutet, daß die Folie in allen genannten Punkten den Anforderungen genügt. Ein unbefriedigendes Ergebnis in nur einem Beurteilungskriterium wird mit "o" ausgedrückt. Sind in mehr als zwei Punkten keine befriedigenden Ergebnisse erzielt worden, so wird die Folie mit "-" eingestuft.

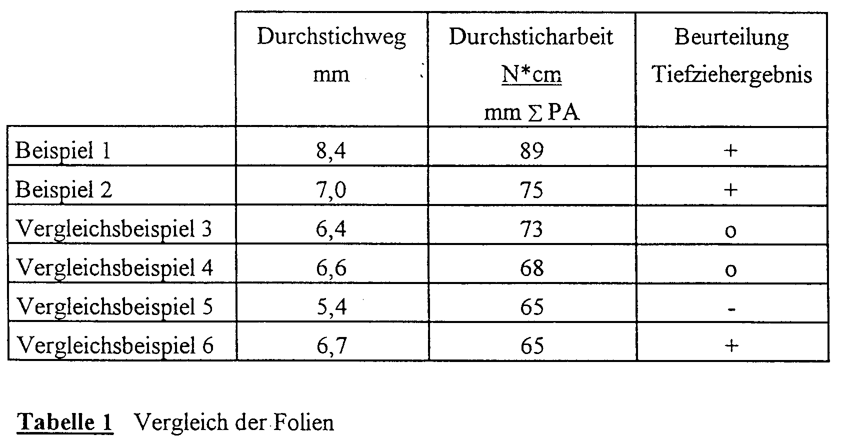

Um die unterschiedlichen Folien vergleichbar darstellen zu können, ist die Durchsticharbeit auf die Polyamidgesamtdicke einer jeden Folie bezogen Die Durchsticharbeit bis zum Bruch einer Folie kann somit unabhängig von der Polyamiddicke dargestellt werden. Würde nur die Schädigungsarbeit angegeben, so wurde der Vergleich verfälscht.

## Patentansprüche

1. Eine mehrschichtige, leicht thermoformbare nicht verstreckte Folie mit der Sequenzanordnung ABCD insbesondere zur Verpackung von scharfkantigen Füllgütern, dadurch gekennzeichnet, daß
- die Sequenz A aus mindestens einem Copolyamid, basierend auf Caprolactam oder einer Mischung aus aliphatischem Polyamid mit Copolyamid, basierend auf Caprolactam oder amorphem Polyamid besteht,
- die Sequenz B mindestens eine Schicht olefinischer (Co-)Polymere beinhaltet,
- die Sequenz C bestehend aus einer oder mehreren Schichten enthaltend ein Copolyamid, basierend auf Caprolactam oder einer Mischung eines aliphatischen Polyamids mit einem Copolyamid, basierend auf Caprolactam oder aromatischen Polyamid beinhaltet und das Dickenverhältnis C/A von 1,5 bis 4 beträgt,
- die Sequenz D mindestens eine Schicht olefinischer (Co-)-Polymere beinhaltet, die als Außenschicht aus einem Siegelwerkstoff besteht, und daß die Dicken im Verhältnis D/B von 3 bis 10, vorzugsweise 4 bis 7, liegen.

2. Folie nach Anspruch 1, dadurch gekennzeichnet, daß die Sequenz C eine Dicke von 30 bis 150 µm, vorzugsweise von 50 bis 100 µm, aufweist.

3. Folie nach Ansprüchen 1 bis 2, dadurch gekennzeichnet, daß die Sequenz D eine Dicke von 100 bis 250 µm, vorzugsweise von 150 bis 200 µm, aufweist.

4. Folie nach Ansprüchen 1 bis 3, dadurch gekennzeichnet, daß die Sequenz B ein mit Säure modifiziertes Polyolefin enthält, das als Haftvermittler zu den Sequenzen A und C wirkt.

5. Folie nach Ansprüchen 1 bis 4, dadurch gekennzeichnet, daß der Folienaufbau ABCD oder aber eine oder mehrere der Sequenzen A, B, C und D durch Coextrusion oder Klebstoffkaschierung oder Extrusionsbeschichtung oder Extrusionskaschierung hergestellt ist.

6. Folie nach Ansprüchen 1 bis 5, dadurch gekennzeichnet, daß der Siegelwerkstoff in der Sequenz D Polyethylen oder Ethylen/Vinylacetat-Copolymeres oder Ethylen/Acrylsäure-Copolymer oder Ethylen/Methylenacrylsäure-Copolymer oder Ionomer ist.

7. Folie nach Ansprüchen 1 bis 6, dadurch gekennzeichnet, daß die der Siegelschicht abgewandte Folienseite und/oder mindestens eine weitere Schicht bedruckt ist.

8. Folie nach Ansprüchen 1 bis 7, dadurch gekennzeichnet, daß die Folie zur Verpackung von scharfkantigen Lebensmitteln eingesetzt wird.

## Claims

1. Multi-layer, readily thermoformable, unoriented film having the sequential arrangement ABCD, in particular for packaging sharp-edged goods, characterised in that
- sequence A consists of at least one copolyamide based on caprolactam or of a blend of aliphatic polyamide with copolyamide based on caprolactam or of amorphous polyamide,
- sequence B contains at least one layer of olefinic (co)polymers,
- sequence C contains one or more layers containing a copolyamide based on caprolactam or a blend of an aliphatic polyamide with a copolyamide based on caprolactam or an aromatic polyamide and the ratio of thicknesses of C:A is 1.5-4,
- sequence D contains at least one layer of olefinic (co)polymers, which as the outermost layer consists of a heat sealing material, and that the thicknesses are in the ratio of D:B of 3-10, preferably of 4-7.

2. Film according to claim 1, characterised in that sequence C has a thickness of 30 to 150 µm, preferably of 50 to 100 µm.

3. Film according to claims 1 to 2, characterised in that sequence D has a thickness of 100 to 250 µm, preferably of 150 to 200 µm.

4. Film according to claims 1 to 3, characterised in that sequence B contains an acid-modified polyolefin which acts as a coupling agent for sequences A and C.

5. Film according to claims 1 to 4, characterised in that the film structure ABCD or one or more of sequences A, B, C and D is produced by coextrusion or adhesive lamination or extrusion coating or extrusion lamination.

6. Film according to claims 1 to 5, characterised in that the heat sealing material in sequence D is polyethylene or ethylene/vinyl acetate copolymer or ethylene/acrylic acid copolymer or ethylene/methylene acrylic acid copolymer or ionomer.

7. Film according to claims 1 to 6, characterised in that the side of the film facing away from the heat sealing layer and/or at least one further layer is printed.

8. Film according to claims 1 to 7, characterised in that the film is used for packaging sharp-edged foodstuffs.

## Revendications

1. Une feuille multicouche non étirée, possédant une bonne aptitude au thermoformage, présentant l'ordre de séquences ABCD et convenant spécialement à l'utilisation pour l'emballage de marchandises à arête vive, caractérisée en ce que
- la séquence A consiste en au moins un copolyamide à base de caprolactame ou un mélange d'un polyamide aliphatique avec un copolyamide à base de caprolactame ou un polyamide amorphe,
- la séquence B comprend au moins une couche de (co)polymères oléfiniques,
- la séquence C consiste en une ou plusieurs couches contenant un copolyamide à base de caprolactame ou un mélange d'un polyamide aliphatique avec un copolyamide à base de caprolactame ou un polyamide aromatique, et le rapport entre les épaisseurs de couches C/A va de 1,5 à 4,
- la séquence D comprend au moins une couche de (co)polymères oléfiniques qui, en tant que couche extérieure, consiste en un matériau soudable, et le rapport entre les épaisseurs des couches D/B va de 3 à 10, de préférence de 4 à 7.

2. Feuille selon la revendication 1, caractérisée en ce que la séquence C a une épaisseur de 30 à 150 µm, de préférence de 50 à 100 µm.

3. Feuille selon les revendications 1 à 2, caractérisée en ce que la séquence D a une épaisseur de 100 à 250 µm, de préférence de 150 à 200 µm.

4. Feuille selon les revendications 1 à 3, caractérisée en ce que la séquence B contient une polyoléfine modifiée par un acide, qui fait fonction d'agent d'adhérence pour les séquences A et C.

5. Feuille selon les revendications 1 à 4, caractérisée en ce que la structure de la feuille ABCD ou une ou plusieurs des séquences, A, B, C et D sont obtenues par co-extrusion ou doublage avec collage ou revêtement par extrusion ou doublage par extrusion.

6. Feuille selon les revendications 1 à 5, caractérisée en ce que le matériau soudable de la séquence D consiste en polyéthylène ou un copolymère éthylène/acétate de vinyle ou un copolymère éthylène/acide acrylique ou un copolymère éthylène/acide méthylène acrylique ou un ionomère.

7. Feuille selon les revendications 1 à 6, caractérisée en ce que la face de la feuille opposée à la couche soudable et/ou au moins une autre couche sont imprimées.

8. Feuille selon les revendications 1 à 7, caractérisée en ce que la feuille est utilisée pour l'emballage de produits alimentaires à arête vive.
